# FASCICULE DE BREVET EUROPEEN

(11) **EP 0 931 738 B1**
(45) Date de publication et mention de la délivrance du brevet: **26.03.2003**
(21) Numéro de dépôt: 99400158.4
(22) Date de dépôt: 25.01.1999
(51) Int. Cl.: B65G 47/08

(54) **Dispositif d'accumulation compacte d'objects identiques provenant d'un convoyeur en ligne**
Vorrichtung zur akkumulierenden, kompakten Förderung von aus einem Förderer kommenden untereinander gleichen Gegenständen
Device for the dense accumulation of identical objects coming out of a conveyor

(30) Priorité: 26.01.1998 FR 9800763
(43) Date de publication de la demande: 28.07.1999
(73) Titulaire: SOCIETE D'UTILISATION SCIENTIFIQUE ET INDUSTRIELLE DU FROID USIFROID, 78310 Maurepas (FR)
(72) Inventeur: Gallet, Patrick, 91540 Mennecy (FR)
(74) Mandataire: Lhuillier, René

(56) Documents cités:
- EP-A- 0 299 139
- EP-B- 0 429 348
- US-A- 3 494 097
- US-A- 5 129 162

## Description

La présente invention concerne un dispositif automatique d'accumulation compacte dans une zone donnée d'objets identiques de forme cylindrique, qui sont acheminés les uns derrière les autres vers cette zone d'accumulation. Lesdits objets peuvent par exemple être des flacons ou des boîtes acheminés par un convoyeur après leur remplissage, et que l'on veut charger de manière compacte, par lots, dans des casiers ou sur des plateaux, sans intervention humaine.

Un tel dispositif de chargement peut, par exemple, améliorer considérablement l'efficacité du chargement de flacons contenant une substance à lyophiliser dans des cuves de lyophilisation, par comparaison avec les méthodes classiques de chargement manuel. L'application à ce domaine de la technique est d'ailleurs décrite dans le brevet EP 0 429 348 B1, qui divulgue un dispositif de chargement automatique auquel la présente invention apporte des perfectionnements substantiels.

On rappelle à cet égard que les cuves de lyophilisation sont destinées à traiter des produits souvent contenus dans des flacons de faible section circulaire. On cherche à rassembler ces flacons de la façon la plus compacte possible pour pouvoir les placer en vrac sur des étagères de la cuve de lyophilisation. Parmi les contraintes essentielles attachées à ce domaine de la technique, on relèvera d'abord les conditions d'hygiène très strictes, dont la satisfaction requiert de préférence un système sans intervention humaine. En outre, il importe de charger (ou de décharger) le plus grand nombre de flacons possible dans le temps le plus court possible, non seulement pour des raisons de rentabilité ordinaire liées aux flux tendus, mais également du fait que, pendant lesdites opérations de chargement et de déchargement, la cuve est ouverte à l'atmosphère extérieure. Cette communication représente évidemment une contrainte fâcheuse puisque le procédé de lyophilisation inclut l'obtention dans les cuves d'une très basse pression et d'un très faible degré d'humidité.

On connaît par ailleurs des dispositifs automatiques de compactage de flacons provenant d'un convoyeur en ligne, dans lesquels les flacons se rangent dans un premier temps transversalement jusqu'à couvrir la distance séparant deux barres de guidage longitudinales, puis sont poussés vers l'avant par un râteau disposé transversalement, de façon que, ces opérations se répétant rangée après rangée, les flacons avancent de manière groupée entre lesdites barres de guidage. De tels dispositifs présentent deux inconvénients majeurs. En premier lieu, les flacons se rassemblent de manière désordonnée de sorte que beaucoup de place est perdue entre les flacons ainsi que sur les côtés latéraux et surtout frontal de la masse de flacons. Un deuxième inconvénient de ce système connu est que, lorsque le râteau transversal pousse une rangée de flacons, certains de ces flacons à l'une ou l'autre extrémité d'une rangée peuvent se coincer entre, d'une part, les barres de guidage, et d'autre part les flacons situés plus à l'intérieur que lesdits flacons d'extrémité ; du fait du "pincement" occasionné, certains de ces flacons d'extrémité peuvent alors se casser, ou être éjectés de la table de chargement. Pour diminuer ces risques, on peut déposer sur les flacons un revêtement antiadhésif (par exemple en silicone), mais cela rend ce procédé évidemment plus coûteux et incommode.

Les dispositifs automatiques que l'on vient de décrire sont donc loin de fournir un compactage parfait des flacons. Par "compactage parfait", on veut dire un groupement de flacons tel que ceux-ci soient serrés les uns contre les autres, de façon que leurs centres forment les noeuds d'un réseau triangulaire parfait. De plus, si l'on peut agencer le système de façon que l'espace entre les bords de la masse dé flacons et les barres de guidage soit toujours très faible, il devient possible de prévoir exactement le nombre de flacons amassés sur une aire donnée, ce qui est naturellement très utile du point de vue de la gestion du flux de flacons, et qui est même indispensable dans le cas d'un emballage automatique des flacons en sortie de traitement. On peut alors parler d'un "recouvrement maximal" de ladite aire.

La présente invention propose un dispositif garantissant le "recouvrement maximal" d'une aire où s'accumulent des objets identiques cylindriques tels que des flacons ou des boîtes acheminés par un convoyeur en ligne, ledit dispositif comprenant d'une part une table vibrante sur laquelle les flacons avancent par petits sauts après y avoir été déposés par le convoyeur, et d'autre part un "râteau oscillant" formé de deux barres latérales longitudinales solidaires, la friction entre les flacons et la surface de ladite table vibrante étant assez faible, et ledit râteau oscillant étant animé d'un mouvement alternatif transversal le long de la table, au cours duquel chaque barre latérale pousse alternativement la masse de flacons en les faisant glisser sur la table.

Avantageusement, la distance entre les barres latérales formant ledit râteau oscillant peut être ajustée en fonction du diamètre des flacons à compacter et du nombre de flacons que l'on souhaite accoler transversalement.

Selon une caractéristique supplémentaire de l'invention, le dispositif comprend deux lames mobiles transversales, chacune située d'un côté de la table vibrante, dont les extrémités internes peuvent se déplacer du bord de la table vers son milieu où lesdites extrémités se rejoignent, de manière à couper le flot de flacons, pour pouvoir former des groupes de flacons dont le nombre dans la direction longitudinale a été choisi à l'avance.

Selon encore une caractéristique supplémentaire de l'invention, quand on ouvre ledit jeu de lames transversales pour laisser passer les flacons, on le fait lentement de sorte que la masse de flacons présente initialement un front en pointe dans sa région centrale, cette dernière venant buter avant les régions latérales contre une barre transversale, derrière laquelle les flacons compactés viennent s'accumuler.

D'autres avantages, buts et caractéristiques de l'invention ressortiront de la description ci-dessous du mode de réalisation préféré de l'invention, ladite description s'appuyant sur les six figures annexées qui représentent, en perspective et vu de dessus, des flacons à compacter avançant sur une table vibrante, au cours des étapes successives d'accumulation selon le dispositif de l'invention.

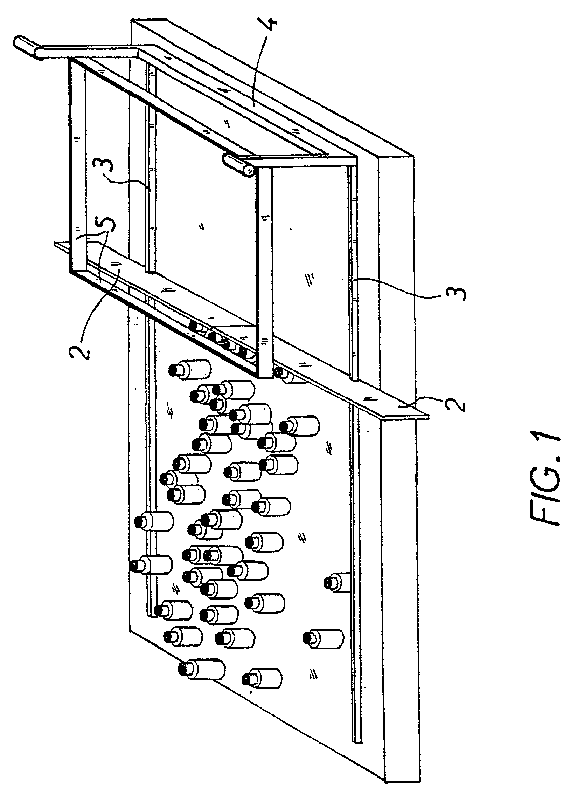

Un convoyeur en ligne (non représenté) dépose en continu des flacons à compacter à une extrémité (en haut à gauche sur les figures) d'une table vibrante 1, qui les fait avancer longitudinalement par petits sauts. Dans un premier temps (figure 1), les flacons s'accumulent derrière deux lames transversales 2 qui sont en position fermée.

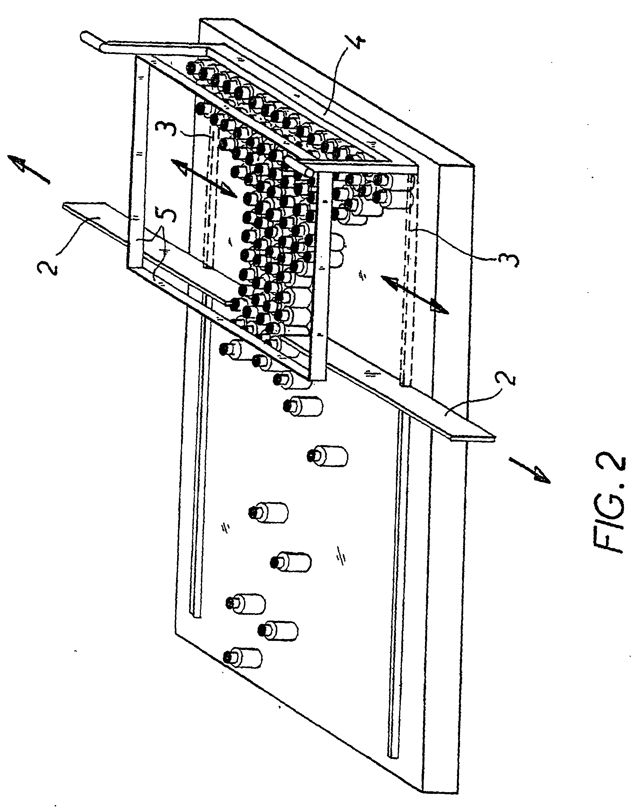

On ouvre ensuite lentement le jeu de lames transversales 2 (figure 2). La masse. de flacons progresse alors, en présentant initialement un front pointant en avant dans sa région centrale. Dans la zone située en avant des lames transversales 2, la masse de flacons est poussée globalement par un râteau oscillant 3 constitué de deux barres longitudinales animées ensemble d'un mouvement alternatif transversal grâce à deux moteurs synchronisés par "cames électroniques". On a découvert que ces poussées alternatives sont étonnamment efficaces pour obtenir le compactage optimal qui est le but de l'invention.

La masse de flacons vient s'accumuler derrière une barre transversale 4 formant butée avant, tout en se plaçant les uns par rapport aux autres de façon à former un réseau triangulaire parfait. Il est à noter que ledit front de la masse de flacons vient au contact de la butée avant 4 d'abord au niveau de cette avancée centrale, avant les régions latérales ; c'est cette caractéristique de l'invention qui garantit en fait le "recouvrement maximal" visé dans l'introduction ; en effet, sans cela, il arrive quelquefois (même si c'est assez rare), que se forme ici ou là, lors du compactage, un "trou" (c'est-à-dire une absence de flacon) situé exactement à un noeud du réseau triangulaire parfait.

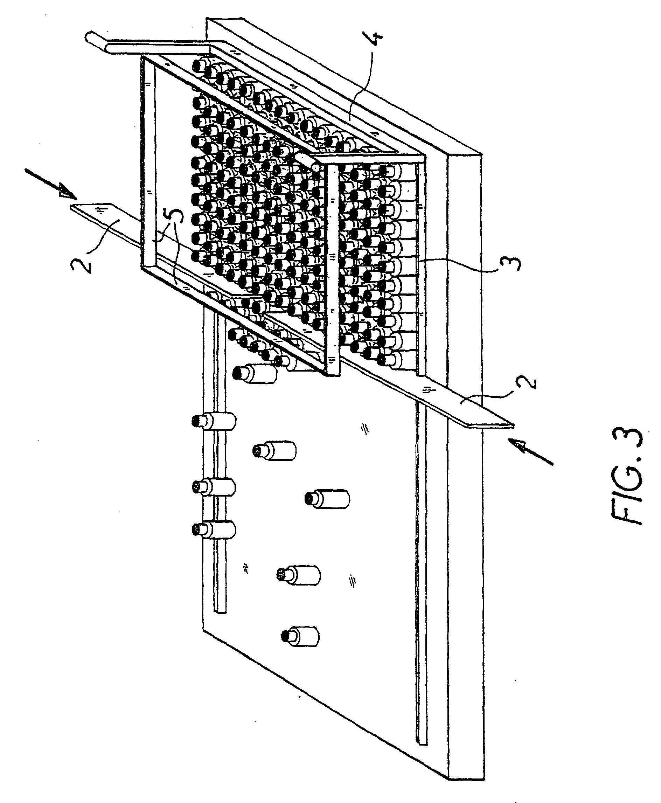

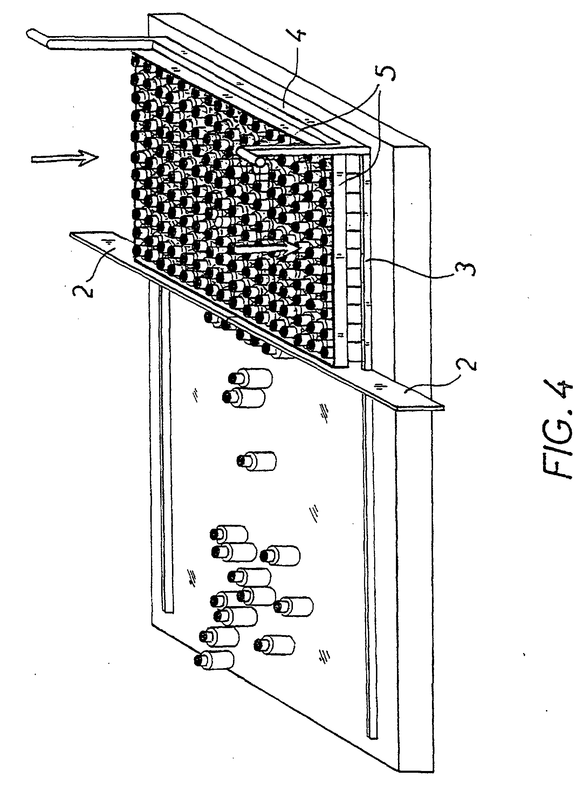

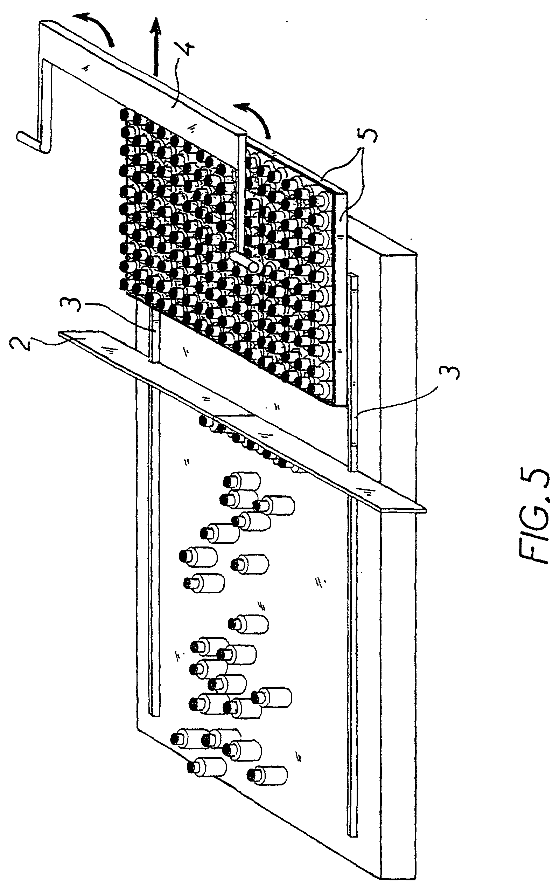

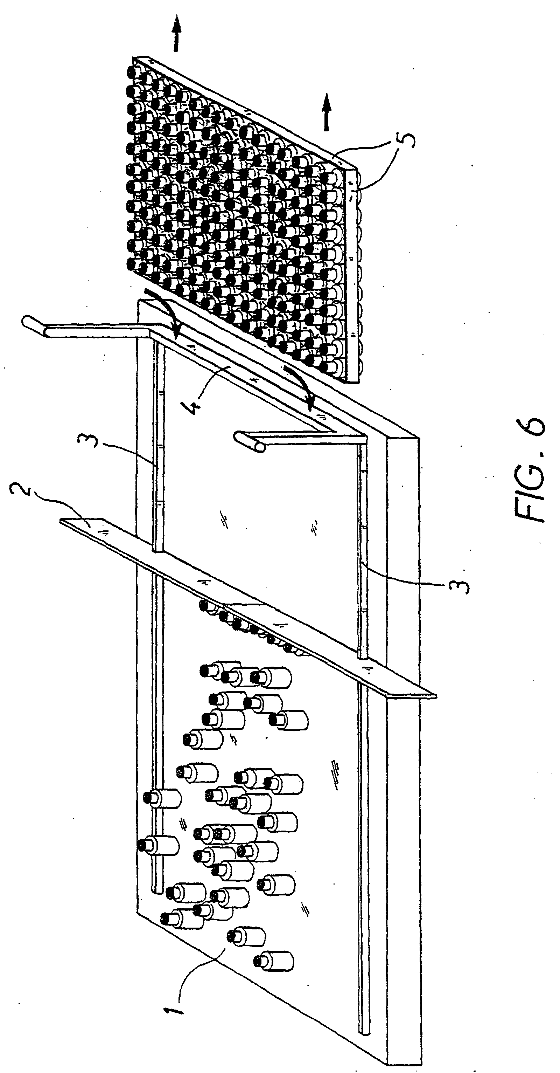

Quand le remplissage de l'aire à couvrir est terminé, on referme le jeu de lames transversales 2 (figure 3). Celles-ci traversent sans peine le flot de flacons, vu que précisément les flacons y sont parfaitement alignés selon des rangées transversales. On abaisse alors (figure 4) un cadre d'enlèvement rigide 5, qui vient entourer les flacons compactés. Puis la butée avant 4 se rétracte (figure 5), laissant passer le cadre 5 qui emporte les flacons vers un plateau ou un chariot (non représenté) placé en avant de la table vibrante 1. Enfin (figure 6), la butée avant 4 revient en place, et le cycle se répète.

Le mode de réalisation préféré de l'invention décrit ci-dessus a été présenté en tant qu'exemple illustrant les principes de la présente invention, mais il est bien clair que l'homme de l'art pourra s'en servir pour réaliser d'autres variantes sans pour autant sortir de l'invention. Par exemple, les objets à compacter peuvent être des boîtes de conserve ou des pièces sortant d'un procédé de fabrication ou d'usinage. Également, le cadre d'enlèvement 5 peut être remplacé par une boîte renversée que l'on souhaite remplir exactement au moyen d'un nombre précis d'objets compactés, avant de la fermer.

## Revendications

1. Dispositif d'accumulation compacte d'objets indentiques garantissant le recouvrement maximal d'une aire où s'accumulent lesdits objets arrivant en continu, **caractérisé en ce qu'**il comprend d'une part une table vibrante (1) sur laquelle lesdits objets identiques avancent par petits sauts, et d'autre part un râteau oscillant (3) formé de deux barres latérales longitudinales solidaires, la friction entre lesdits objets identiques et la surface de ladite table vibrante (1) étant assez faible, et ledit râteau oscillant (3) étant animé d'un mouvement alternatif transversal, au cours duquel chaque barre latérale pousse alternativement la masse d'objets identiques en les faisant glisser sur la table (1).

2. Dispositif d'accumulation compacte selon la revendication 1, **caractérisé en ce que** la distance entre les barres latérales formant ledit râteau oscillant (3) est ajustée en fonction du diamètre desdits objets identiques, et du nombre d'entre eux que l'on souhaite accoler transversalement.

3. Dispositif d'accumulation compacte selon la revendication 1 ou la revendication 2, **caractérisé en ce qu'**il comprend un jeu de deux lames mobiles transversales (2), chacune située d'un côté de la table vibrante (1), dont les extrémités internes se déplacent du bord de la table vers son milieu où lesdites extrémités se rejoignent, de manière à couper le flot desdits objets identiques, pour former des groupes d'objets identiques dont le nombre dans la direction longitudinale a été choisi à l'avance.

4. Dispositif d'accumulation compacte selon la revendication 3, **caractérisé en ce qu'**il comporte une barre transversale (4) servant de butée avant, derrière laquelle lesdits objets identiques compactés viennent s'accumuler.

5. Procédé de compactage optimal pour la mise en oeuvre du dispositif selon la revendication 4, **caractérisé en ce qu'**il consiste à ouvrir lentement ledit jeu de lames transversales (2) pour laisser passer lesdits objets identiques, de sorte que la masse desdits objets identiques présente initialement un front en pointe dans sa région centrale, cette dernière venant buter contre ladite barre transversale (4) avant les régions latérales.

## Claims

1. A device for the compact accumulation of identical objects guaranteeing the maximum coverage of an area where the said continuously arriving objects accumulate, **characterized in that** it comprises, on the one hand, a vibrating table (1) on which the said identical objects advance in small jumps, and on the other hand, an oscillating rake (3) formed from two united longitudinal side bars, the friction between the said identical objects and the surface of the said vibrating table (1) being fairly low, and the said oscillating rake (3) being moved with an alternating transverse movement, during which each side bar alternately pushes the mass of identical objects, causing them to slide over the table (1).

2. A compact accumulation device according to claim 1, **characterized in that** the distance between the side bars forming the said oscillating rake (3) is adjusted according to the diameter of the said identical objects, and to the number of them that it is desired to bring together transversely.

3. A compact accumulation device according to claim 1 or claim 2, **characterized in that** it comprises a set of two transverse movable plates (2), each one located on a side of the vibrating table (1), the inner ends of which move from the edge of the table towards its middle where the said ends join each other, so as to cut off the stream of the said identical objects, in order to form groups of identical objects whose number in the longitudinal direction has been chosen in advance.

4. A compact accumulation device according to claim 3, **characterized in that** it comprises a transverse bar (4) acting as a front stop, behind which the said compacted identical objects accumulate.

5. An optimal compacting method for implementing the device according to claim 4, **characterized in that** it consists in slowly opening the said set of transverse plates (2) in order to allow the said identical objects to pass through, such that the mass of the said identical objects initially has a pointed front in its central region, the latter abutting against the said transverse bar (4) before the side regions.

## Patentansprüche

1. Vorrichtung zum kompakten Ansammeln von gleichen Gegenständen, die die maximale Bedeckung einer Fläche garantiert, auf der sich die genannten, kontinuierlich ankommenden Gegenstände ansammeln,
**dadurch gekennzeichnet,**
**dass** sie einerseits einen Vibriertisch (1) umfasst, auf dem sich die genannten gleichen Gegenstände in kleinen Sprüngen vorwärtsbewegen, und andererseits einen Vibrierrechen (3), gebildet durch zwei fest miteinander verbundene Längsseitenleisten, wobei die Reibung zwischen den genannten gleichen Gegenständen und der Oberfläche des genannten Vibriertisches (1) ziemlich klein ist und der genannte Vibrierrechen (3) eine transversale Wechselbewegung ausführt, in deren Verlauf abwechselnd jede Seitenleiste gegen die Masse von gleichen Gegenständen stößt, so dass diese auf dem Tisch (1) gleiten.

2. Vorrichtung zum kompakten Ansammeln nach Anspruch 1, **dadurch gekennzeichnet, dass** der Abstand zwischen den den genannten Vibrierrechen (3) bildenden Seitenleisten angepasst ist an den Durchmesser der genannten gleichen Gegenstände und an die Anzahl dieser Gegenstände, die man in Querrichtung aneinanderreihen möchte.

3. Vorrichtung zur kompakten Ansammlung nach Anspruch 1 oder Anspruch 2, **dadurch gekennzeichnet, dass** sie einen Satz aus zwei transversal beweglichen Messern (2) umfasst, von denen sich jedes auf einer Seite des Vibriertisches (1) befindet und deren innere Enden sich vom Rand des Tisches gegen seine Mitte bewegen, wo diese Enden aufeinandertreffen, so dass der Fluss der genannten gleichen Gegenstände unterbrochen wird, um Gruppen gleicher Gegenstände zu bilden, deren Anzahl in der Längsrichtung vorher festgelegt worden ist.

4. Vorrichtung zur kompakten Ansammlung nach Anspruch 3, **dadurch gekennzeichnet, dass** sie eine Querleiste (4) umfasst, die als vorderer Anschlag dient und hinter der sich die genannten gleichen Gegenstände kompakt angeordnet ansammeln.

5. Optimales Kompaktierungsverfahren zur Anwendung des Verfahrens nach Anspruch 4, **dadurch gekennzeichnet, dass** es darin besteht, den genannten Satz aus transversalen Messern (2) langsam zu öffnen, um die genannten gleichen Gegenstände durchzulassen, so dass die Masse der genannten gleichen Gegenstände anfänglich in ihrem mittleren Bereich eine spitze Front bildet, die vor den seitlichen Bereichen an der Querleiste (4) anschlägt.
